# EUROPÄISCHE PATENTSCHRIFT

(11) **EP 2 038 347 B1**
(45) Veröffentlichungstag und Bekanntmachung des Hinweises auf die Patenterteilung: **03.03.2010**
(21) Anmeldenummer: 07730110.9
(22) Anmeldetag: 13.06.2007
(51) Int. Cl.: C08L 53/02

(54) **HOCHTRANSPARENTE UND ZÄH-STEIFE STYROL-BUTADIEN-BLOCKCOPOLYMERMISCHUNGEN**
HIGHLY TRANSPARENT AND TOUGH-STIFF STYRENE-BUTADIENE BLOCK COPOLYMER MIXTURES
MÉLANGES DE COPOLYMÈRES EN BLOC STYRÈNE-BUTADIÈNE HAUTEMENT TRANSPARENTS ET VISCORIGIDES

(30) Priorität: 27.06.2006 US 816727 P
(43) Veröffentlichungstag der Anmeldung: 25.03.2009
(73) Patentinhaber: BASF SE, 67056 Ludwigshafen (DE)
(72) Erfinder: STEWART, Jennifer, R., Dearborn, Mi 48124 (US); MERKEL, Peter, 67308 Zellertal (DE); WAGNER, Daniel, 67098 Bad Dürkheim (DE); KNOLL, Konrad, 68199 Mannheim (DE); KOCH, Jürgen, 67141 Neuhofen (DE)
(86) Internationale Anmeldenummer: PCT/EP2007/055799
(87) Internationale Veröffentlichungsnummer: WO 2008/000623

(56) Entgegenhaltungen:
- EP-A- 1 580 234
- WO-A-2006/036301
- DE-A1- 19 810 141
- US-A- 5 284 915

## Beschreibung

Die Erfindung betrifft eine Mischung, die
a) 25 bis 75 Gew.-% eines Blockcopolymeren A, welches mindestens einen Hartblock S aus vinylaromatischen Monomeren und ein oder mehrere Weichblöcke B_{A} aus jeweils 0 bis 5 Gew.-% vinylaromatischen Monomeren und 95 bis 100 Gew.-% Dienen aufweist, und wobei der Massenanteil der Hartblöcke S im Blockcopolymeren A 65 bis 90 Gew.-% ausmacht;
b) 5 bis 25 Gew.-% eines Blockcopolymeren B, welches eine sternförmige Struktur mit mindestens zwei endständigen Hartblöcken S₁ und S₂ mit unterschiedlichem Molekulargewicht aus vinylaromatischen Monomeren und ein oder mehrere Copolymerblöcke (B/S)_{B} aus jeweils 20 bis 60 Gew.-% vinylaromatischen Monomeren und 80 bis 40 Gew.-% Dienen aufweist, und wobei der Massenanteil der Hartblöcke S im Blockcopolymeren B 40 bis 70 Gew.-% ausmacht;
c) 0 bis 70 Gew.-% eines von A und B verschiedenen Blockcopolymeren C oder Polystyrol und
d) 0 bis 6 Gew.-% eines Plastifizierungsmittels D;
enthält, wobei die Summe der Komponenten A) bis D) 100 Gew.-% ergibt.

Die US 3,639,517 beschreibt sternförmig verzweigte Styrol-Butadien-Blockcopolymere mit 75 bis 95 Gewichtsprozent endständigen Blöcken aus vinylaromatischen Monomeren und 5 bis 30 Gewichtsprozent elastomeren, überwiegend aus konjugierten Dieneinheiten bestehender Blöcke. Sie können mit Standardpolystyrol zu hochtransparente Mischungen abgemischt werden. Mit zunehmendem Anteil Polystyrol erhöht sich der E-Modul auf Kosten der Zähigkeit. Mischungen mit etwa 40 Gewichtsprozent Polystyrol sind für die meisten Anwendungen schon zu spröde. Man kann meist nur 20 bis maximal 30 Gewichtsprozent Polystyrol bei noch akzeptabler Duktilität zumischen.

Sternförmige Blockcopolymere mit 40 Gew.-% Hartblöcken aus vinylaromatischen Monomeren und Weichblöcken mit statistischem Aufbau aus vinylaromatischen Monomeren und Dienen sind in WO 00/58380 beschrieben. Sie ergeben selbst mit 60 Gewichtsprozent Polystyrol noch duktile Mischungen. Der Nachteil dieser Abmischungen ist die deutlich sichtbare Trübung, die für anspruchsvollere Anwendungen und dickere Teile unakzeptabel ist.

Aufgabe der Erfindung war es, zäh-steife Mischungen von Styrol-Butadien-Blockcopolymeren zu finden, die gleichzeitig eine hohe Transparenz aufweisen.

Demgemäß wurde die oben genannte Mischung gefunden.

Schon geringe Anteile des Blockcopolymeren B steigern die Duktilität von Mischungen aus Blockcopolymer A und Polystyrol deutlich, ohne dass die Transparenz signifikant abfällt. Der Anteil an Polystyrol in der Mischung, bei dem noch eine gewisse Duktilität beobachtet wird, hängt vom Verhältnis BlockcopolymerA/Blockcopolymer B ab. Je kleiner dieses Verhältnis ist, desto mehr Polystyrol kann zugemischt werden. Bevorzugt sind Mischungsverhältnisse von BlockcopolymerA/Blockcopolymer B im Bereich von 90/10 bis 70/30, besonders bevorzugt um etwa 80/20. Bei einem Verhältnis BlockcopolymerA/Blockcopolymer B von 80/20 enthält die Mischung bevorzugt 35 bis 40 Gewichtsprozent Polystyrol.

Bevorzugt enthält die Mischung 35 bis 55 Gew.-% des Blockcopolymeren A, 10 bis 20 Gew.-% des Blockcopolymeren B und 25 bis 55 Gew.-% eines von A und B verschiedenen Blockcopolymeren C oder Polystyrol. Neben den Blockcopolymeren A, B und gegebenenfalls C kann die Mischung noch geringere Mengen an weiteren thermoplastischen Polymeren und 1 bis 6 Gew.-% üblicher Hilfsstoffe, wie Plastifizierungsmittel enthalten. Als Plastifizierungsmittel können 0 bis 6 Gew.-%, bevorzugt 2 bis 4 Gew.-% eines homogen mischbaren Öls oder Ölgemisches, insbesondere Weißöl oder Dioktyl-Adipat oder deren Mischungen verwendet werden.

### Blockcopolymer A:

Die Mischung enthält 25 bis 75 Gew.-% eines Blockcopolymeren A, welches mindestens einen Hartblock S aus vinylaromatischen Monomeren und ein oder mehrere Weichblöcke B_{A} aus jeweils 0 bis 5 Gew.-% vinylaromatischen Monomeren und 95 bis 100 Gew.-% Dienen aufweist, und wobei der Massenanteil der Hartblöcke S im Blockcopolymeren A 65 bis 90 Gew.-%, bevorzugt 70 bis 80 Gew.-% ausmacht.

Die Glasübergangstemperatur des Blocks B_{A} liegt bevorzugt im Bereich von -70 bis - 100 °C. Die Glasübergangstemperatur wird durch die Monomerzusammensetzung und dem 1,2-Vinylanteil der Dieneinheiten beeinflusst und kann durch Differential Scanning Calorimetrie (DSC) oder Differential Thermal Analysis (DTA) bestimmt oder gemäß der Fox-Gleichung berechnet werden. Bevorzugt besteht der Block B_{A} aus 100 Gew.-% Butadien.

Die Blockcopolymeren A können beispielsweise durch sequentielle anionische Polymerisation mit Lithiumalkylen, gegebenenfalls in Gegenwart von Randomizern wie Tetrahydrofuran oder Kaliumsalzen erhalten werden. Bevorzugt werden Kaliumsalze mit mit einem Verhältnis von anionischem Initiator zu Kaliumsalz im Bereich von 25:1 bis 60:1 verwendet. Dadurch kann gleichzeitig ein niedriger Anteil an 1,2-Verknüpfungen der Butadieneinheiten erreicht werden.

Bevorzugt liegt der Anteil der 1,2-Verknüpfungen der Butadieneinheiten im Bereich von 8 bis 15%, bezogen auf die Summe der 1,2-, 1,4-cis- und 1,4-trans-Verknüpfungen.

Besonders bevorzugt besteht das Blockcopolymer A aus Sternpolymeren [S-B_{A}]ₙX mit n Sternästen, die durch Kopplung mit einem n-funktionellen Kopplungsmittel X oder durch Initiierung mit einem n-funktionellen Initiator zugänglich sind. Als Kopplungsmittel geeignet ist z.B. epoxidiertes Pflanzenöl wie epoxidiertes Leinsamen- oder Sojabohnenöl. Man erhält in diesem Fall Sterne mit 3 bis 5 Ästen.

Die gewichtsmittlere Molmasse M_{W} des Copolymerblocks B_{A} liegt in der Regel im Bereich von 20.000 bis 80.000 g/mol. Bevorzugt bestehen die Blöcke S aus Styroleinheiten. Bei den anionisch hergestellten Polymeren erfolgt die Kontrolle der Molmasse über das Verhältnis von Monomer- zu Initiatormenge. Initiator kann aber auch mehrfach nach bereits erfolgter Monomerdosierung zugegeben werden, dann erhält man eine bi- oder multimodale Verteilung.

Bevorzugt weist das Blockcopolymere A eine sternförmige Struktur mit endständigen Blöcken S₁ mit einer zahlenmittleren Molmasse Mₙ im Bereich von 5.000 bis 30.000 g/mol und endständigen Blöcken S₂ mit einer zahlenmittleren Molmasse Mₙ im Bereich von 35.000 bis 150.000 g/mol auf. Das molare Verhältnis S₁/S₂ für das Blockcopolymer A liegt im allgemeinen im Bereich von 0,5:1 bis 10:1, bevorzugt im Bereich von 1:1 bis 5:1. Es kann beispielsweise durch sequentiellen anionischen Polymerisation der Sternäste mit zweifacher Initiatordosierung in entsprechendem molaren Verhältnis erreicht werden. Bevorzugt sind die Blöcke S aus Styrol als vinylaromatischem Monomer aufgebaut.

Geeignete Blockcopolymere A sind im Handel unter der Bezeichnung Styrolux® 3G 33, Styroclear GH 62, K-Resin 03, K-Resin 01 oder Kraton D 1401 P erhältlich.

### Blockcopolymer B

Als Blockcopolymer B enthält die erfindungsgemäße Mischung 5 bis 25 Gew.-% eines Blockcopolymeren , welches eine sternförmige Struktur mit mindestens zwei endständigen Hartblöcken S₁ und S₂ mit Unterschiedlichem Molekulargewicht aus vinylaromatischen Monomeren und ein oder mehrere Copolymerblöcke (B/S)_{B} aus jeweils 20 bis 60 Gew.-% vinylaromatischen Monomeren und 80 bis 40 Gew.-% Dienen aufweist, und wobei der Massenanteil der Hartblöcke S im Blockcopolymeren B 40 bis 70 Gew.-% ausmacht; Als Blockcopolymere B eignen sich insbesondere steife Blockcopolymere, welche aus 60 bis 90 Gew.-% vinylaromatischen Monomeren und 10 bis 40 Gew.-% Dien, bezogen auf das gesamte Blockcopolymer, bestehen und aus überwiegend vinylaromatischen Monomeren, insbesondere Styrol enthaltenden Hartblöcken S und Diene, wie Butadien und Isopren enthaltenden Weichblöcken B oder B/S aufgebaut sind. Besonders bevorzugt sind Blockcopolymere mit 70-80 Gew.-% Styrol und 20-30 Gew.-% Dien.

Die Weichblöcke (B/S)_{B} des Blockcopolymeren B weisen bevorzugt eine zahlenmittlere Molmasse Mₙ im Bereich von 50.000 bis 150.000 g/mol und eine Glasübergangstemperatur Tg_{B} im Bereich von -65° bis 0°C auf.

Die Copolymerblöcke (B/S)_{B} des Blockcopolymeren B weisen bevorzugt eine statistischer Verteilung der vinylaromatischen Monomeren und Dienen auf. Ebenfalls bevorzugt sind Blockcopolymere B, welche mindestens zwei aufeinanderfolgende Copolymerblöcke (B/S)_{B} mit jeweils einem Monomergradienten von vinylaromatischen Monomeren zu Dienen aufweisen.

Die Blockcopolymere B weisen eine sternförmige Struktur mit mindestens zwei endständigen Hartblöcke S₁ und S₂ mit unterschiedlichem Molekulargewicht aus vinylaromatischen Monomeren auf, wobei der Anteil der Summe der Hartblöcke S mindestens 40 Gew.-%, bezogen auf das gesamte Blockcopolymer B beträgt. Bevorzugt weisen die entständigen Blöcke S₁ eine zahlenmittlere Molmasse Mₙ im Bereich von 5.000 bis 30.000 g/mol und S₂ eine zahlenmittleren Molmasse Mₙ im Bereich von 35.000 bis 150.000 g/mol auf.

Bevorzugt sind polymodale Styrol-Butadien-Blockcopolymere mit endständigen Styrolblöcken, wie sie beispielsweise in DE-A 25 50 227,EP-A 0 654 488 oder EP-A 0 761 704 beschrieben sind.

Geeignete Blockcopolymere B sind im Handel unter der Bezeichnung Styrolux® 3G 55 erhältlich.

Die erfindungsgemäßen Mischungen sind hoch transparent und eignen sich zur Herstellung von Folien, insbesondere Tiefziehfolien, bei denen eine Kombination aus hoher Transparenz und Brillanz bei hoher Steifigkeit und ausreichender Zähigkeit gefordert ist oder Folien für Blisterverpackungen. Des weiteren eignen sie sich für Spritzgussanwendungen, beispielsweise transparente Kleiderbügel, transparentes Spielzeug oder medizintechnische Artikel.

### Beispiele:

### Blockcopolymer A

Zur Herstellung des sternförmigen Styrol-Butadien-Blockcopolymeren A wurde 643 I Cyclohexan vorgelegt, bei 60°C mit 1,6 ml sec-Butyllithium (BuLi) austitriert und anschließend mit 821 ml einer 1,35 molaren sec.-Butyl-lithium-Lösung zur Initiierung versetzt und auf 40°C abgekühlt. Polymerisiert wurde in zwei Portionen und die Maximaltemperatur durch Gegenkühlen auf 75°C begrenzt. Zunächst wurden 96,6 kg Styrol zudosiert und ein Styrolblock S₁ polymerisiert. Anschließend wurden weitere 3,612 I der 1,35 molaren sec-Butyllithium-Lösung zugegeben und weitere 53,5 kg Styrol zudosiert. Nach dem vollständigen Umsatz wurden 49,9 kg Butadien zugegeben und polymerisert. Danach wurden die lebenden Polymerketten durch Zugabe von Edenol B 82 gekoppelt, mit CO₂/Wasser angesäuert und eine Stabilisatorlösung zugegeben. Das Cyclohexan wurde im Vakuumtrockenschrank eingedampft.

### Blockcopolymer B:

Ein sternförmiges Blockcopolymer B (26 Gew.-% Butadien, 74 Gew.-% Styrol) mit statistischen Copolymerblöcken B/S wurde durch sequentielle anionische Polymerisation von Styrol und Butadien und anschließende Kopplung mit expoxidiertem Leinöl entsprechend Beispiel 17 aus WO 00/58380 hergestellt.

### Komponente C

Als Komponente C wurde Standardpolystyrol PS 158 K mit einem M_{w} von 270.000 und einem Mₙ von 103.000 der BASF Aktiengesellschaft eingesetzt.

### Mischungsbeispiele 1 bis 15

Die Blockcopolymermischungen wurden jeweils durch Aufschmelzen der in Tabelle 1 angegebenen Gewichtsteile der Blockcopolymeren A und B sowie der Komponenten C (Polystyrol PS 158 K) im Extruder hergestellt und anschließend zu 2 mm dicken Platten bzw. 4 mm dicken Rundscheiben gepresst.

### Bei 1V, 6V und 11V handelt es sich um Vergleichsversuche

**Tabelle 1: Gewichtsanteile der Blockcopolymeren A, B und Polystyrol PS 158 K in den Mischungsbeispielen 1 bis 15:**

| Beispiel | Blockcopolymer A | Blockcopolymer B | Polystyrol PS 158 K |
|---|---|---|---|
| 1 V | 40 | 0 | 60 |
| 2 | 36 | 4 | 60 |
| 3 | 32 | 8 | 60 |
| 4 | 28 | 12 | 60 |
| 5 | 24 | 16 | 60 |
| 6V | 50 | 0 | 50 |
| 7 | 45 | 5 | 50 |
| 8 | 40 | 10 | 50 |
| 9 | 35 | 15 | 50 |
| 10 | 30 | 20 | 50 |
| 11 V | 60 | 0 | 40 |
| 12 | 54 | 6 | 40 |
| 13 | 48 | 12 | 40 |
| 14 | 42 | 18 | 40 |
| 15 | 36 | 24 | 40 |

Die mechanischen Werte wie E-Modul, Spannung und Dehnung wurden an 2 mm dicken, bei 200°C verpressten Platten nach ISO 527bestimmt.
Die optischen Eigenschaften, wie Gelbwert (Yellowness Index YI), Trübung (Haze) und Transparenz wurden an 4 mm dicken, bei 200°C verpressten Rundscheiben gemäß ASTM D 1925-70 ermittelt. Die Messwerte für die Mischungen 1 bis 15 sind in Tabelle 2 zusammengestellt.

**Tabelle 2: Mechanische und optische Eigenschaften der Mischungen 1 bis 15**

| | E-Modul | Strecksp. | Reissdehnung | Transp | Haze | YI |
|---|---|---|---|---|---|---|
| | [N/mm²] | [N/mm²] | [%] | [%] | [%] | [%] |
| 1V | 1973 | 34,7 | 12,4 | 76,7 | 6,4 | 24,1 |
| 2 | 2179 | 37,6 | 16,4 | 76,9 | 6,2 | 24,5 |
| 3 | 1719 | 33 | 42 | 73,6 | 7,8 | 28,5 |
| 4 | 1950 | 35,3 | 20,6 | 71,2 | 8,8 | 32,8 |
| 5 | 1569 | 31,2 | 18,8 | 72,2 | 8,5 | 31,6 |
| 6V | 1879 | 30,7 | 19 | 80,8 | 4,9 | 16,6 |
| 7 | 1766 | 27,6 | 42,7 | 80,4 | 5,5 | 17,4 |
| 8 | 1656 | 29 | 67,1 | 78,3 | 5,4 | 20,7 |
| 9 | 1229 | 27,1 | 115 | 76,7 | 6,4 | 24,6 |
| 10 | 1119 | 25,4 | 135 | 73,6 | 8 | 29,8 |
| 11V | 1553 | 24,5 | 159 | 83,2 | 4,6 | 11,9 |
| 12 | 1601 | 24,6 | 170 | 82,6 | 4,7 | 13,5 |
| 13 | 1646 | 24,6 | 194 | 82,5 | 4,9 | 13,9 |
| 14 | 1454 | 25,8 | 210 | 81,3 | 5,6 | 16,3 |
| 15 | 1153 | 24,6 | 233 | 79,4 | 6,3 | 20 |

## Patentansprüche

1. Mischung, enthaltend
a) 25 bis 75 Gew.-% eines Blockcopolymeren A, welches mindestens einen Hartblock S aus vinylaromatischen Monomeren und ein oder mehrere Weichblöcke B_{A} aus jeweils 0 bis 5 Gew.-% vinylaromatischen Monomeren und 95 bis 100 Gew.-% Dienen aufweist, und wobei der Massenanteil der Hartblöcke S im Blockcopolymeren A 65 bis 90 Gew.-% ausmacht;
b) 5 bis 25 Gew.-% eines Blockcopolymeren B, welches eine sternförmige Struktur mit mindestens zwei endständigen Hartblöcken S₁ und S₂ mit unterschiedlichem Molekulargewicht aus vinylaromatischen Monomeren und ein oder mehrere Copolymerblöcke (B/S)_{B} aus jeweils 20 bis 60 Gew.-% vinylaromatischen Monomeren und 80 bis 40 Gew.-% Dienen aufweist, und wobei der Massenanteil der Hartblöcke S im Blockcopolymeren B 40 bis 70 Gew.-% ausmacht;
c) 0 bis 70 Gew.-% eines von A und B verschiedenen Blockcopolymeren C oder Polystyrol und
d) 0 bis 6 Gew.-% eines Plastifizierungsmittels D;
wobei die Summe der Komponenten A) bis D) 100 Gew.-% ergibt.

2. Mischung nach Anspruch 1, **dadurch gekennzeichnet, dass** sie
a) 35 bis 55 Gew.-% des Blockcopolymeren A,
b) 10 bis 20 Gew.-% des Blockcopolymeren B und
c) 25 bis 55 Gew.-% eines von A und B verschiedenen Blockcopolymeren C oder Polystyrol enthält.

3. Mischung nach Anspruch 1 oder 2, **dadurch gekennzeichnet, dass** die Weichblöcke B_{A} des Blockcopolymeren A eine Glasübergangstemperatur Tg_{A} im Bereich von -70° bis -100°C aufweisen.

4. Mischung nach einem der Ansprüche 1 bis 3, **dadurch gekennzeichnet, dass** die Weichblöcke (B/S)_{B} des Blockcopolymeren B eine Glasübergangstemperatur Tg_{B} im Bereich von -65° bis 0°C aufweisen.

5. Mischung nach einem der Ansprüche 1 bis 4, **dadurch gekennzeichnet, dass** der Block B_{A} des Blockcopolymeren A eine zahlenmittlere Molmasse Mₙ im Bereich von 20.000 bis 80.000 g/mol aufweist.

6. Mischung nach einem der Ansprüche 1 bis 5, **dadurch gekennzeichnet, dass** der Block (B/S)_{B} des Blockcopolymeren B eine zahlenmittlere Molmasse Mₙ im Bereich von 50.000 bis 150.000 g/mol aufweist.

7. Mischung nach einem der Ansprüche 1 bis 6, **dadurch gekennzeichnet, dass** die Blockcopolymere A und B jeweils eine sternförmige Struktur aufweisen und die Hartblöcke S sich endständig an den Stemästen befinden.

8. Mischung nach einem der Ansprüche 1 bis 7, **dadurch gekennzeichnet, dass** die Copolymerblöcke (B/S)_{B} des Blockcopolymeren B eine statistische Verteilung der vinylaromatischen Monomeren und Dienen aufweisen.

9. Mischung nach einem der Ansprüche 1 bis 7, **dadurch gekennzeichnet, dass** das Blockcopolymere B mindestens zwei aufeinanderfolgende Copolymerblöcke (B/S)_{B} mit jeweils einem Monomergradienten von vinylaromatischen Monomeren zu Dienen aufweist.

10. Mischung nach einem der Ansprüche 1-9, **dadurch gekennzeichnet, dass** das sternförmige Blockcopolymere B endständige Blöcke S₁ mit einer zahlenmittleren Molmasse Mₙ im Bereich von 5.000 bis 30.000 g/mol und endständige Blöcke S₂ mit einer zahlenmittleren Molmasse Mₙ im Bereich von 35.000 bis 150.000 g/mol aufweist.

11. Mischung nach einem der Ansprüche 1 bis 10, **dadurch gekennzeichnet, dass** das Blockcopolymere A eine sternförmige Struktur mit endständigen Blöcken S₁ mit einer zahlenmittleren Molmasse Mₙ im Bereich von 5.000 bis 30.000 g/mol und endständigen Blöcken S₂ mit einer zahlenmittleren Molmasse Mₙ im Bereich von 35.000 bis 150.000 g/mol aufweist.

12. Mischungen nach Anspruch 11, **dadurch gekennzeichnet, dass** das molare Verhältnis S₁/S₂ für das Blockcopolymer A im Bereich von 0,5:1 bis 10:1 liegt.

## Claims

1. A mixture, comprising
a) from 25 to 75% by weight of a block copolymer A which comprises at least one hard block S composed of vinylaromatic monomers and comprises one or more soft blocks B_{A} in each case composed of from 0 to 5% by weight of vinylaromatic monomers and from 95 to 100% by weight of dienes, where the proportion by weight of the hard blocks S in the block copolymer A is from 65 to 90% by weight;
b) from 5 to 25% by weight of a block copolymer B which comprises a star-shaped structure having at least two terminal hard blocks S₁, and S₂ with different molecular weight composed of vinylaromatic monomers and comprises one or more copolymer blocks (B/S)_{B} in each case composed of from 20 to 60% by weight of vinylaromatic monomers and from 80 to 40% by weight of dienes, where the proportion by weight of the hard blocks S in the block copolymer B is from 40 to 70% by weight;
c) from 0 to 70% by weight of polystyrene or of a block copolymer C other than A and B, and
d) from 0 to 6% by weight of a plasticizer D,
where the entirety of components A) to D) gives 100% by weight.

2. The mixture according to claim 1, which comprises
a) from 35 to 55% by weight of the block copolymer A,
b) from 10 to 20% by weight of the block copolymer B, and
c) from 25 to 55% by weight of polystyrene or of a block copolymer C other than A and B.

3. The mixture according to claim 1 or 2, wherein the glass transition temperature Tg_{A} of the soft blocks B_{A} of the block copolymer A is in the range from -70° to -100°C.

4. The mixture according to any of claims 1 to 3, wherein the glass transition temperature Tg_{B} of the soft blocks (B/S)_{B} of the block copolymer B is in the range from -65° to 0°C.

5. The mixture according to any of claims 1 to 4, wherein the number-average molar mass Mₙ of the block B_{A} of the block copolymer A is in the range from 20 000 to 80 000 g/mol.

6. The mixture according to any of claims 1 to 5, wherein the number-average molar mass Mₙ of the block (B/S)_{B} of the block copolymer B is in the range from 50 000 to 150 000 g/mol.

7. The mixture according to any of claims 1 to 6, wherein each of the block copolymers A and B has a star-shaped structure and the hard blocks S are terminal to the arms of the star.

8. The mixture according to any of claims 1 to 7, wherein the copolymer blocks (B/S)_{B} of the block copolymer B have random distribution of the vinylaromatic monomers and dienes.

9. The mixture according to any of claims 1 to 7, wherein the block copolymer B comprises at least two successive copolymer blocks (B/S)_{B} each having a monomer gradient from vinylaromatic monomers to dienes.

10. The mixture according to any of claims 1-9, wherein the star-shaped block copolymer B has terminal blocks S₁ whose number-average molar mass Mₙ is in the range from 5000 to 30 000 g/mol and has terminal blocks S₂ whose number-average molar mass Mₙ is in the range from 35 000 to 150 000 g/mol.

11. The mixture according to any of claims 1 to 10, wherein the block copolymer A has a star-shaped structure having terminal blocks S₁ whose number-average molar mass Mₙ is in the range from 5000 to 30 000 g/mol and having terminal blocks S₂ whose number-average molar mass Mₙ is in the range from 35 000 to 150 000 g/mol.

12. The mixture according to claim 11, wherein the molar ratio S₁/S₂ for the block copolymer A is in the range from 0.5:1 to 10:1.

## Revendications

1. Mélange contenant
a) 25 à 75% en poids d'un copolymère à blocs A, qui contient au moins un bloc dur S constitué par des monomères aromatiques de vinyle et un ou plusieurs blocs souples B_{A} constitués à chaque fois par 0 à 5% en poids de monomères aromatiques de vinyle et 95 à 100% en poids de diènes et la proportion massique des blocs durs S dans le copolymère à blocs A représentant 65 à 90% en poids ;
b) 5 à 25% en poids d'un copolymère à blocs B, qui présente une structure en étoile avec au moins deux blocs durs S₁ et S₂ en position d'extrémité, présentant un poids moléculaire différent, constitué par des monomères aromatiques de vinyle et un ou plusieurs blocs copolymères (B/S)_{B} constitués à chaque fois par 20 à 60% en poids de monomères aromatiques de vinyle et 80 à 40% en poids de diènes et la proportion massique des blocs durs S dans le copolymère à blocs B représentant 40 à 70% en poids ;
c) 0 à 70% en poids d'un copolymère à blocs C différent de A et de B ou de polystyrène et
d) 0 à 6% en poids d'un plastifiant D ;
la somme des composants A) à D) étant de 100% en poids.

2. Mélange selon la revendication 1, **caractérisé en ce qu'**il contient
a) 35 à 55% en poids du copolymère à blocs A,
b) 10 à 20% en poids du copolymère à blocs B et
c) 25 à 55% en poids d'un copolymère à blocs C différent de A et de B ou de polystyrène.

3. Mélange selon la revendication 1 ou 2, **caractérisé en ce que** les blocs souples B_{A} du copolymère à blocs A présentent une température de transition vitreuse Tg_{A} dans la plage de -70° à -100°C.

4. Mélange selon l'une quelconque des revendications 1 à 3, **caractérisé en ce que** les blocs souples (B/S)_{B} du copolymère à blocs B présentent une température de transition vitreuse Tg_{B} dans la plage de -65° à 0°C.

5. Mélange selon l'une quelconque des revendications 1 à 4, **caractérisé en ce que** le bloc B_{A} du copolymère à blocs A présente une masse molaire numérique moyenne Mₙ dans la plage de 20 000 à 80 000 g/mol.

6. Mélange selon l'une quelconque des revendications 1 à 5, **caractérisé en ce que** le bloc (B/S)_{B} du copolymère à blocs B présente une masse molaire numérique moyenne Mₙ dans la plage de 50 000 à 150 000 g/mol.

7. Mélange selon l'une quelconque des revendications 1 à 6, **caractérisé en ce que** les copolymères à blocs A et B présentent à chaque fois une structure en étoile et les blocs durs S se trouvent en position d'extrémité des branches de l'étoile.

8. Mélange selon l'une quelconque des revendications 1 à 7, **caractérisé en ce que** les copolymères à blocs (B/S)_{B} du copolymère à blocs B présentent une répartition statistique des monomères aromatiques de vinyle et des diènes.

9. Mélange selon l'une quelconque des revendications 1 à 7, **caractérisé en ce que** le copolymère à blocs B présente au moins deux blocs copolymères (B/S)_{B} successifs présentant à chaque fois un gradient de monomères allant des monomères aromatiques de vinyle aux diènes.

10. Mélange selon l'une quelconque des revendications 1 à 9, **caractérisé en ce que** le copolymère à blocs en forme d'étoile B présente des blocs S₁ en position d'extrémité présentant une masse molaire numérique moyenne Mₙ dans la plage de 5000 à 30 000 g/mol et des blocs S₂ en position d'extrémité présentant une masse molaire numérique moyenne Mₙ dans la plage de 35 000 à 150 000 g/mol.

11. Mélange selon l'une quelconque des revendications 1 à 10, **caractérisé en ce que** le copolymère à blocs A présente une structure en forme d'étoile avec des blocs S₁ en position d'extrémité présentant une masse molaire numérique moyenne Mₙ dans la plage de 5000 à 30 000 g/mol et des blocs S₂ en position d'extrémité présentant une masse molaire numérique moyenne Mₙ dans la plage de 35 000 à 150 000 g/mol.

12. Mélanges selon la revendication 11, **caractérisés en ce que** le rapport molaire S₁/S₂ pour le copolymère à blocs A se situe dans la plage de 0,5:1 à 10:1.
